# EUROPEAN PATENT SPECIFICATION

(11) **EP 4 279 344 B1**
(45) Date of publication and mention of the grant of the patent: **02.04.2025**
(21) Application number: 22173501.2
(22) Date of filing: 16.05.2022
(51) Int. Cl.: B60T 1/10, B60T 8/32, B60T 13/66, B60T 17/22, F16D 61/00, B60T 8/17

(54) **BRAKE SYSTEM OF A RAILWAY VEHICLE, RAILWAY VEHICLE, AND METHOD FOR OPERATING THE BRAKE SYSTEM**
BREMSSYSTEM EINES SCHIENENFAHRZEUGES, SCHIENENFAHRZEUG UND VERFAHREN ZUM BETREIBEN DES BREMSSYSTEMS
SYSTÈME DE FREINAGE D'UN VÉHICULE FERROVIAIRE, VÉHICULE FERROVIAIRE, ET PROCÉDÉ DE FONCTIONNEMENT DU SYSTÈME DE FREINAGE

(43) Date of publication of application: 22.11.2023
(73) Proprietor: KNORR-BREMSE Systeme für Schienenfahrzeuge GmbH, 80809 München (DE)
(72) Inventor: KREMER, Miklos, 1238 Budapest (HU)

(56) References cited:
- EP-A1- 3 831 640
- DE-A1- 102006 055 859
- DE-A1- 19 529 919
- US-A- 5 828 135
- FLANKL MICHAEL ET AL: "Non-invasive KERS-based auxiliary energy supply system for freight trains", IET ELECTRICAL SYSTEMS IN TRANSPORTATION, THE INSTITUTION OF ENGINEERING AND TECHNOLOGY, MICHAEL FARADAY HOUSE, SIX HILLS WAY, STEVENAGE, HERTS. SG1 2AY, UK, vol. 9, no. 2, 1 June 2019 (2019-06-01), pages 93 - 101, XP006079691, ISSN: 2042-9738, DOI: 10.1049/IET-EST.2018.5014

## Description

The invention relates to a brake system of a railway vehicle, a railway vehicle, and a method for operating the brake system, in particular, an electro-mechanical brake system.

Up to now, there are railway vehicles, e.g., box wagons, which are not provided with an own electrical supply. Therefore, if a locomotive without a device for supplying the wagons with electrical energy, such as shunting locomotives, are used or if a wagon tears off from the locomotive or from another wagon, no electrical supply for the wagon is available. In particular, when electro-mechanical brakes are used, electrical energy is required for operating brakes, and, in addition, a wheel slide protection system only works with electrical energy. Therefore, an own energy supply for each railway vehicle is required because, otherwise, the electro-mechanical brakes do not work.

Moreover, due to legal requirements, an amount of energy which is sufficient for stopping a vehicle also in the case of a torn off wagon or wagons of a train part is to be provided in the wagon or in the wagons.

For such an energy supply, batteries, particularly accumulators, are provided and are usually charged from a traction unit. However, for fulfilling the above-mentioned requirement, the batteries have to have sufficient energy capacity and, therefore, they are big and have a high weight and cause increased costs.

Document DE 195 29 919 A1 discloses a brake system comprising a controller, a wheel speed sensor system, a generator, and a brake actuator. The controller comprises a brake control unit and the generator generates electrical energy and can charge a battery for supplying the electronic system of a rail-borne wagon.

Therefore, the object underlying the invention is to remedy the above-mentioned disadvantages and problems and to provide a brake system, a railway vehicle, and a method for operating the brake system, enabling a safe operation of a railway vehicle while not excessively increasing manufacturing and operation costs.

The object is achieved by a brake system of a railway vehicle according to claim 1, a railway vehicle according to claim 6, and a method for operating the brake system according to claim 7. Advantageous further developments of the invention are included in the dependent claims.

According to an aspect of the invention, a brake system of a railway vehicle comprises a controller, a wheel speed sensor system, a generator, and a brake actuator. The controller comprises a brake control unit and an energy control unit. The wheel speed sensor system comprises a cogwheel provided on an axle of the railway vehicle, and a wheel speed sensor attached to a non-rotating component of an axle mounting device of the axle in a stationary manner. The generator comprises a permanent magnet attached to the axle and a coil attached to the non-rotating component of the axle mounting device in a stationary manner, and the generator is configured to generate electrical energy and to supply the controller with electrical energy. The energy control unit is configured to control the generator, and the brake control unit is configured to process signals from the wheel speed sensor and to control the brake actuator based on the processed signals.

By this brake system, the generator can generate energy for the controller and the brake actuator can be operated such that the brake actuator, even in case of a malfunction of the external energy supply of the railway vehicle, can actuate a brake of the railway vehicle so that the safety can be ensured even though the railway vehicle is torn off.

Due to an advantageous implementation of the brake system, the controller comprises a wheel slide protection unit, and the wheel slide protection unit is configured to process signals from the wheel speed sensor and to control the brake actuator based on the processed signals.

This implementation enables a more safe operation since also wheel slide is prevented even in case of a malfunction of a regular energy supply of the controller.

According to the invention, the cogwheel is provided in a region of an end of the axle and the permanent magnet is attached to the axle in the region of the end of the axle.

When the cogwheel as well as the permanent magnet are located at the end of the axle, the respective collaborating parts, i.e., the wheel speed sensor and the coil, are also located in this area so that a functional unit is possible with an easy access for assembly and service.

Further, according to the invention, the end of the axle is accommodated in a non-rotating axle box of the railway vehicle, and the wheel speed sensor and the coil are attached to a lid of the axle box.

Thereby, already provided components of a carriage can be used for accommodating and protecting the parts of the functional unit so that there is no need to provide further components for attaching and protecting these parts which safes costs and installation space.

In a further advantageous implementation of the brake system, the brake system comprises a cable harness including at least two cables configured to transmit control signals from the controller to the generator, one cable configured to transmit energy generated by the generator, and one cable configured to connect the wheel speed sensor system and the controller.

When using the cable harness for these cables, the assembly work is reduced and the wiring can be done such that the cables can easily be fixed and protected from damage.

According to a further advantageous implementation of the brake system, it further comprises an energy storage device configured to store the electrical energy generated by the generator, and the energy control unit is configured to process data from the energy storage device and to control the generator based on the processed data.

This implementation enables the operation of the brake system also when the railway vehicle is separated from, e.g., a traction vehicle. Further, in particular, by the energy control unit, the available amount of energy in the storage device can be kept on a required level.

In a further advantageous implementation of the brake system, the generator is configured to supply another electric consumer of the railway vehicle with energy.

Such a brake system enables the operation of the other electric consumer, such as electric doors, when the railway vehicle is separated from other parts of the train or when the locomotive is not provided with an energy supply system for the railway vehicle.

According to a further aspect of the invention, a railway vehicle comprises a brake system according to the invention so that, even in case of a malfunction of the external energy supply of the railway vehicle, a brake of the railway vehicle can be operated so that the safety can be ensured even though the railway vehicle is torn off.

According to another aspect of the invention, a method for controlling a brake system according to the invention comprises the steps: monitoring operating parameters of the railway vehicle by the energy control unit and activating the generator by the energy control unit for generating electrical energy based on the operating parameters.

Based on results of the monitoring of the operating parameters, e.g., the results of a motion or of a speed of the railway vehicle, the generator can be activated and it can be controlled such as to provide a currently sufficient amount of energy. Thus, the operation of the railway vehicle with the brake system becomes safe.

In an advantageous implementation of the method, one of the operating parameters is a supply voltage of the controller automatically detected by a voltmeter and processed by the energy control unit, and the generator is activated by the energy control unit when the supply voltage falls below a predetermined threshold.

In this manner, an energy supply having an appropriated voltage can be provided and a failure of a main supply can be detected in order to ensure safe operation of the brake system even in case of a malfunction of the main supply.

According to the invention, one of the operating parameters is a current energy capacity of the energy storage device detected by a voltmeter and processed by the energy control unit, and the generator is activated by the energy control unit when the current energy capacity falls below a predetermined threshold.

By this function, a sufficient energy supply for braking actions can be provided.

Further, according to the invention, the predetermined threshold of the current energy capacity is determined based on an estimated energy consumption for braking the railway vehicle from a current speed to a standstill.

Thereby, the subsequent safe stopping can be ensured, e.g., in case of a torn off of the railway vehicle.

Due to a further advantageous implementation of the method, one of the operating parameters is an actuation signal for the brake actuator, and the generator is activated when the brake actuator is actuated.

This function enables an economic provision of energy since the generator does not generate energy during travelling of the railway vehicle with a constant speed or during acceleration but merely when the railway vehicle is decelerated. Thereby, the generator can also assist the brakes such that also the wear of the brakes is reduced.

In yet a further advantageous implementation of the method, the generator supplies energy to another electric consumer of the railway baking.

This implementation enables an operation of the other electric consumer although no energy supply from, e.g., a locomotive, is provided for this consumer in order to save electric lines.

Subsequently, the invention is elucidated by means of embodiment referring to the attached drawings.

In particular,
- Fig. 1: shows a block diagram of a brake system of a railway vehicle; and
- Fig. 2: shows an end of an axle of the railway vehicle.

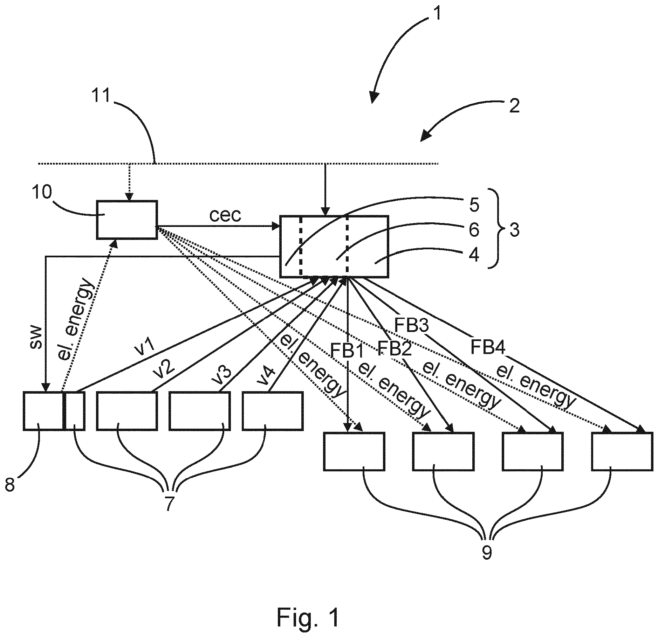

**Fig. 1** shows a block diagram of a brake system 2 of a railway vehicle 1.

The brake system 2 comprises a controller 3 which, in turn, comprises a brake control unit 4, an energy control unit 5, and a wheel slide protection unit 6. In an alternative embodiment, the wheel slide protection unit 6 is omitted.

The brake system 2 further comprises four wheel speed sensor systems 7 respectively providing operating parameters whether the railway vehicle 1 moves or is in standstill and, also, operating parameters about the speed of the railway vehicle 1. In alternative embodiments, another number of wheel speed sensor systems 7, nevertheless, at least one wheel speed sensor system 7, is provided.

Furthermore, the brake system 2 comprises a generator 8. The generator 8 is configured to supply the controller 3 with electrical energy. In alternative embodiments, another quantity of generators 8 is provided and/or the generator 8 also supplies electrical energy to at least one other electrical consumer of the railway vehicle 1.

Moreover, the brake system 2 comprises four electro-mechanical brake actuators 9. In alternative embodiments, another quantity of the electromechanical brake actuators 9, nevertheless, at least one brake actuator 9, is provided. The brake actuators 9 are actuated by actuation signals from the brake control unit 4 as indicated by the arrows "FB1" to "FB4".

Finally, the brake system 2 comprises an accumulator as an energy storage device 10, nevertheless, in alternative embodiments, another quantity of energy storage devices 10 is provided or the energy storage device 10 is not provided but it is omitted. The energy storage device 10 is configured to store the electrical energy generated by the generator 8 and the energy control unit 5 is configured to process data being operating parameters from the energy storage device 10 and to control the generator 8 based on the processed data. Alternatively, the energy control unit 5 does not control the generator 8 based on the processed data from the energy storage device but based on other operating parameters.

The railway vehicle 1 is further provided with a power line 11 as a main energy supply which supplies the controller 3 and the energy storage device 10 with electrical energy. In case of a proper function of a main energy supply, the energy storage device 10 stores the energy supplied by the power line 11.

The wheel speed sensor systems 7 provide operating parameters concerning the wheel speed and, therefore, concerning the speed of the railway vehicle 1, as indicated by the arrows "v1" to "v4".

The energy storage device 10 provides operating parameters "cec" concerning its current energy capacity and the current energy capacity of the energy storage device 10 is monitored by the energy control unit 5.

Furthermore, the energy control unit 5 activates and deactivates the generator 8 by a switching signal "sw" based on the operating parameters.

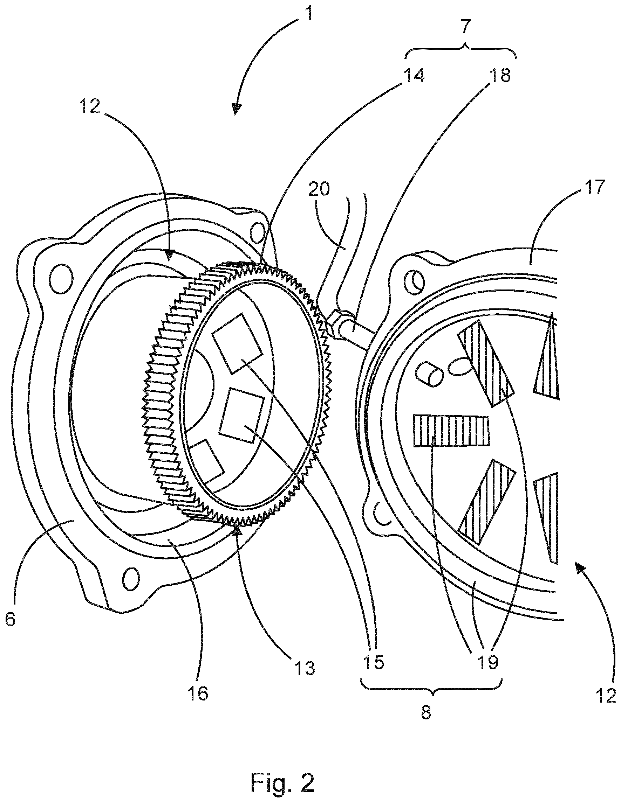

**Fig. 2** shows an axle 12 of the railway vehicle 1. In particular, Fig. 2 shows an end 13 of the axle 12.

In a region of the end 13, the axle 12 is provided with a cogwheel 14. Furthermore, also in the region of the end 13 of the axle 12, permanent magnets 15 are attached to the axle 12. The permanent magnets 15 are attached to the axle 12 directly. In alternative embodiments, the permanent magnets 15 are attached to the axle 12 through a separate component comprising the cogwheel 14, in particular, the permanent magnets 15 are attached by fastening members extending through the component comprising the cogwheel 14 to fasten the permanent magnets 15 and the component comprising the cogwheel to the axle 12.

According to the present invention, the railway vehicle 1 is provided with a non-rotating axle box 16 which accommodates the end 13 of the axle 12. The axle box 16 accommodates bearings which are configured to support the axle 12 in a rotating manner with respect to the axle box 16. Further, the axle box 16 is attached to the railway vehicle 1, in particular, my means of springs, so as to transmit the weight of the railway vehicle 1 to the axle 12 and, therefore, to wheels of the railway vehicle 1. Furthermore, the axle box 16 is closed by a lid 17 to which a wheel speed sensor 18 and coils 19 are attached. For the sake of visibility, the lid 17 is removed from the position where it closes the axle box 16 and it is located beside the axle box 16. In alternative embodiments, at least one of the wheel speed sensor 18 and the coils 19 is not attached to the lid 17 but to another component of the axle box 16 or to another non-rotating part of an axle mounting device in a stationary manner with respect to the axle 12.

The cogwheel 14 and the wheel speed sensor 18 form the wheel speed sensor system 7. The permanent magnets 15 and the coils 19 form the generator 8 which generates electrical energy when the permanent magnets 15 pass along the coils 19. The cogwheel 14, the wheel speed sensor 18, the permanent magnets 15 and the coils 19 are components of the brake system 2 of the railway vehicle 1.

In alternative embodiments, not according to the claimed invention, the cogwheel 14 and the permanent magnets 15 are not provided in the region of the end 13 of the axle 12 but, also as separate components connected to the axle 12, at other suitable locations on the axle 12. Furthermore, alternatively, the wheel speed sensor 18 and the coils 19 are not provided in the shown quantity, but a suitable number of the wheel speed sensor 18 and the coils 19, nevertheless, at least one wheel speed sensor 18 and at least one coil 19, is provided. Also, in alternative embodiments, the quantity of the permanent magnets 15 does not correspond to the shown permanent magnets 15 but at least one permanent magnet 15 is provided.

Furthermore, the brake system 12 comprises a cable harness 20. The cable harness 20 includes a cable configured to transmit control signals from the controller 3 to the generator 8, a cable configured to transmit energy generated by the generator 8, and a cable configured to connect the wheel speed sensor system 7 and the controller 3, in particular, the wheel slide protection unit 6. Alternatively, at least two of these cables or further cables are included in the cable harness 20.

As to be seen by the arrows FB1 to FB4 in Fig. 1, the brake control unit 4 is configured to control the brake actuators 9, by the arrow sw, the energy control unit 5 is configured to control the generator 8, and the wheel slide protection unit 6 is configured to receive and to process signals, in particular, the operating parameters "wheel speed" v1 to v4 from the wheel speed sensors 18 of the wheel speed sensor systems 7 and to also control the brake actuators 9 based on the processed signals via the brake control unit 4 (FB1 to FB4).

In operation, a method for controlling the brake system 2 according to the invention is executed. The method comprises the steps: monitoring operating parameters of the railway vehicle 1 by the energy control unit 5, and activating the generator 8 for generating electrical energy by the energy control unit 5 based on the operating parameters.

One of the monitored operating parameter is a supply voltage of the controller 3 which is automatically detected by a voltmeter (not shown) and processed by the energy control unit 5. If the supply voltage of the controller 3 and, therefore, of the brake actuators 9, is above a predetermined threshold, the supply with electrical energy from, e.g., a locomotive, is provided, the generator 8 is not activated.

However, if, due to, e.g., torn off of the railway vehicle 1 or a failure of the energy supply from the locomotive, the supply voltage detected by the voltmeter falls below the predetermined threshold, the generator 8 is activated by the energy control unit 5. Therefore, then, the controller 3 and the brake actuators 9 are supplied by the electrical energy from the generator 8, in particular, by the electrical energy generated by the generator 8 and stored in the energy storage device 10.

Another monitored operating parameter is a current energy capacity of the energy storage device 10 also detected by the voltmeter. If the current energy capacity of the energy storage device 10 falls below a predetermined threshold, the generator 8 is activated for charging the energy storage device 10. The predetermined threshold is determined based on an estimated energy consumption for braking the railway vehicle 1 from a current speed to a standstill. Alternatively, the threshold can be determined based on another possible maneuver, for example several brakings or a braking while the wheel slide protection unit 6 is in operation.

Furthermore, one of the operating parameters is an activation signal for the brake actuators 9, and the generator 8 is activated when the brake actuators 9 are actuated. In particular, the generator 8 is activated when the brake actuators 9 are actuated and the supply voltage falls below the predetermined threshold. Alternatively, the generator 8 is activated during braking independently from the level of the supply voltage so that the current energy capacity of the energy storage device 10 is always maintained on a sufficient level. In further alternative embodiments, the operating parameters are considered for the decision if the generator 8 is operated in a suitable combination.

If necessary, the generator 8 also supplies another electric consumer (not shown) with electrical energy such that, e.g., in case of the torn off railway vehicle 1, also the other electric consumer can be operated.

While the invention has been illustrated and described in detail in the drawing and the foregoing description, such illustration and description are to be considered illustrative or exemplary and not restrictive. The invention is defined in the claims, nevertheless, it is not limited to the disclosed embodiments. From reading the present disclosure, other modifications will be apparent to a person skilled in the art. Such modifications may involve other features, which are already known in the art and may be used instead of or in addition to features already described herein, however the present invention is defined by the appended claims. In the claims, the word "comprising" does not exclude other elements or steps, and the indefinite article "a" or "an" does not exclude a plurality.

### LIST OF REFERENCE SIGNS

- 1: railway vehicle
- 2: brake system
- 3: controller
- 4: brake control unit
- 5: energy control unit
- 6: wheel slide protection unit
- 7: wheel speed sensor system
- 8: generator
- 9: brake actuator
- 10: energy storage device
- 11: powerline
- 12: axle
- 13: end (of axle)
- 14: cogwheel
- 15: permanent magnets
- 16: axle box
- 17: lid (of axle box)
- 18: wheel speed sensor
- 19: coil
- 20: cable harness

- FB1 to FB4: actuation signals (from control unit)
- cec: operating parameter "current energy capacity"
- sw: switching signal
- v1 to v4: operating parameter "wheel speed"

## Claims

1. A brake system (2) of a railway vehicle (1), the brake system (2) comprising
a controller (3),
a wheel speed sensor system (7),
a generator (8), and
a brake actuator (9),
wherein
the controller (3) comprises
a brake control unit (4), and
the generator (8) is configured to generate electrical energy and to supply the controller (3) with electrical energy,
**characterized in that**
the controller further comprises an energy control unit (5),
the wheel speed sensor system (7) comprises
a cogwheel (14) provided on an axle (12) of the railway vehicle (1), and
a wheel speed sensor (18) attached to a non-rotating component of an axle mounting device of the axle (12) in a stationary manner, and
the generator (8) comprises
a permanent magnet (15) attached to the axle (12), and
a coil (19) attached to the non-rotating component of the axle mounting device in a stationary manner,
wherein
the energy control unit (5) is configured to control the generator (8),
the brake control unit (4) is configured to process signals from the wheel speed sensor (18) and to control the brake actuator (9) based on the processed signals,
the cogwheel (14) is provided in the region of an end of the axle (12) and the permanent magnet (15) is attached to the axle (12) in the region of the end (13) of the axle (12),
the end (13) of the axle (12) is accommodated in a non-rotating axle box (16) of the railway vehicle (1), and
the wheel speed sensor (18) and the coil (19) are attached to a lid (17) of the axle box (16).

2. The brake system (2) of claim 1, wherein
the controller (3) comprises a wheel slide protection unit (6), and
the wheel slide protection unit (6) is configured to process signals from the wheel speed sensor (18) and to control the brake actuator (9) based on the processed signals.

3. The brake system (2) of anyone of the preceding claims, wherein
the brake system (2) comprises a cable harness (20) including at least two cables configured to transmit control signals from the controller (3) to the generator (8), one cable configured to transmit energy generated by the generator (8), and one cable configured to connect the wheel speed sensor system (7) and the controller (3).

4. The brake system (2) of anyone of the preceding claims, wherein
the brake system (2) further comprises an energy storage device (10) configured to store the electrical energy generated by the generator (8), and the energy control unit (5) is configured to process data from the energy storage device (10) and to control the generator (8) based on the processed data.

5. The brake system (2) of anyone of the preceding claims, wherein
the generator (8) is configured to supply another electric consumer of the railway vehicle (1) energy.

6. A railway vehicle (1) comprising a brake system (2) according to anyone of the preceding claims.

7. A method for controlling a brake system (2) according to anyone of the claims 1 to 5, the method comprising the steps:
monitoring operating parameters of the railway vehicle (1) by the energy control unit (5); and
activating the generator (8) by the energy control unit (5) for generating electrical energy based on the operating parameters, wherein
one of the operating parameters is a current energy capacity of the energy storage device (10) detected by a voltmeter and processed by the energy control unit (5), and the generator (8) is activated by the energy control unit (5) when the current energy capacity falls below a predetermined threshold,
**characterized in that**
the predetermined threshold of the current energy capacity is determined based on an estimated energy consumption for braking the railway vehicle (1) from a current speed to a standstill.

8. The method of claim 7, wherein
one of the operating parameters is a supply voltage of the controller (3) automatically detected by a voltmeter and processed by the energy control unit (5), and the generator (8) is activated by the energy control unit (5) when the supply voltage falls below a predetermined threshold.

9. The method of anyone of claims 7 or 8, wherein
one of the operating parameters is an actuation signal for the brake actuator (9), and
the generator (8) is activated when the brake actuator (9) is actuated.

10. The method of anyone of claims 7 to 9, wherein
the generator (8) supplies energy to another electric consumer of the railway vehicle (1).

## Patentansprüche

1. Bremssystem (2) eines Schienenfahrzeugs (1), wobei das Bremssystem (2) umfasst
eine Steuereinheit (3),
ein Raddrehzahl-Sensorsystem (7),
einen Generator (8), und
eine Bremsbetätigungsvorrichtung (9),
wobei
die Steuereinheit (3) umfasst
eine Bremssteuereinheit (4), und
der Generator (8) konfiguriert ist, um elektrische Energie zu erzeugen und elektrische Energie zur Steuereinheit (3) zuzuführen,
**dadurch gekennzeichnet, dass**
die Steuereinheit weiter eine Energiesteuereinheit (5) umfasst,
das Raddrehzahl-Sensorsystem (7) umfasst
ein Zahnrad (14), das auf einer Achse (12) des Schienenfahrzeugs (1) bereitgestellt ist, und
einen Raddrehzahl-Sensor (18), der ortsfest an einer sich nicht drehenden Komponente einer Achsmontagevorrichtung der Achse (12) befestigt ist, und
der Generator (8) umfasst
einen Dauermagneten (15), der an der Achse (12) befestigt ist, und
eine Spule (19), die ortsfest an der sich nicht drehenden Komponente der Achsmontagevorrichtung befestigt ist,
wobei
die Energiesteuereinheit (5) konfiguriert ist, um den Generator (8) zu steuern,
die Bremssteuereinheit (4) konfiguriert ist, um Signale vom Raddrehzahl-Sensor (18) zu verarbeiten und die Bremsbetätigungsvorrichtung (9) basierend auf den verarbeiteten Signalen zu steuern,
das Zahnrad (14) im Bereich eines Endes der Achse (12) bereitgestellt ist und der Dauermagnet (15) im Bereich des Endes (13) der Achse (12) an der Achse (12) befestigt ist,
das Ende (13) der Achse (12) in einem sich nicht drehenden Achslager (16) des Schienenfahrzeugs (1) aufgenommen ist, und
der Raddrehzahl-Sensor (18) und die Spule (19) an einem Deckel (17) des Achslagers (16) befestigt sind.

2. Bremssystem (2) nach Anspruch 1, wobei
die Steuereinheit (3) eine Radgleitschutzeinheit (6) umfasst, und
die Radgleitschutzeinheit (6) konfiguriert ist, um Signale vom Raddrehzahl-Sensor (18) zu verarbeiten und die Bremsbetätigungsvorrichtung (9) basierend auf den verarbeiteten Signalen zu steuern.

3. Bremssystem (2) nach einem der vorstehenden Ansprüche, wobei
das Bremssystem (2) einen Kabelbaum (20) umfasst, der mindestens zwei Kabel beinhaltet, die konfiguriert sind, um Steuersignale von der Steuereinheit (3) zum Generator (8) zu übertragen, ein Kabel, das konfiguriert ist, um vom Generator (8) erzeugte Energie zu übertragen, und ein Kabel, das konfiguriert ist, um das Raddrehzahl-Sensorsystem (7) und die Steuereinheit (3) zu verbinden.

4. Bremssystem (2) nach einem der vorstehenden Ansprüche, wobei
das Bremssystem (2) weiter eine Energiespeichervorrichtung (10) umfasst, die konfiguriert ist, um die von dem Generator (8) erzeugte elektrische Energie zu speichern, und die Energiesteuereinheit (5) konfiguriert ist, um Daten von der Energiespeichervorrichtung (10) zu verarbeiten und den Generator (8) basierend auf den verarbeiteten Daten zu steuern.

5. Bremssystem (2) nach einem der vorstehenden Ansprüche, wobei
der Generator (8) konfiguriert ist, um einem weiteren elektrischen Verbraucher des Schienenfahrzeugs (1) Energie zuzuführen.

6. Schienenfahrzeug (1), das ein Bremssystem (2) nach einem der vorstehenden Ansprüche umfasst.

7. Verfahren zum Steuern eines Bremssystems (2) nach einem der Ansprüche 1 bis 5, wobei das Verfahren die Schritte umfasst zum:
Überwachen von Betriebsparametern des Schienenfahrzeugs (1) durch die Energiesteuereinheit (5); und
Aktivieren des Generators (8) durch die Energiesteuereinheit (5) zum Erzeugen elektrischer Energie basierend auf den Betriebsparametern, wobei
einer der Betriebsparameter eine aktuelle Energiekapazität der Energiespeichervorrichtung (10) ist, die von einem Voltmeter erkannt, und von der Energiesteuereinheit (5) verarbeitet wird, und der Generator (8) von der Energiesteuereinheit (5) aktiviert wird, wenn die aktuelle Energiekapazität einen vorbestimmten Schwellenwert unterschreitet,
**dadurch gekennzeichnet, dass**
der vorbestimmte Schwellenwert der aktuellen Energiekapazität basierend auf einem geschätzten Energieverbrauch zum Abbremsen des Schienenfahrzeugs (1) von einer aktuellen Geschwindigkeit bis zu einem Stillstand bestimmt wird.

8. Verfahren nach Anspruch 7, wobei
einer der Betriebsparameter eine Versorgungsspannung der Steuereinheit (3) ist, die von einem Voltmeter automatisch erkannt, und von der Energiesteuereinheit (5) verarbeitet wird, und der Generator (8) von der Energiesteuereinheit (5) aktiviert wird, wenn die Versorgungsspannung unter einen vorbestimmten Schwellenwert fällt.

9. Verfahren nach einem der Ansprüche 7 oder 8, wobei
einer der Betriebsparameter ein Betätigungssignal für die Bremsbetätigungsvorrichtung (9) ist, und
der Generator (8) aktiviert wird, wenn die Bremsbetätigungsvorrichtung (9) aktiviert wird.

10. Verfahren nach einem der Ansprüche 7 bis 9, wobei
der Generator (8) einem anderen elektrischen Verbraucher des Schienenfahrzeugs (1) Energie zuführt.

## Revendications

1. Système de freinage (2) d'un véhicule ferroviaire (1), le système de freinage (2) comprenant
un dispositif de commande (3),
un système de capteur de vitesse de roue (7),
un générateur (8), et
un actionneur de frein (9),
dans lequel
le dispositif de commande (3) comprend
une unité de commande de frein (4), et
le générateur (8) est configuré pour générer de l'énergie électrique et pour alimenter le dispositif de commande (3) en énergie électrique,
**caractérisé en ce que**
le dispositif de commande comprend en outre une unité de commande d'énergie (5),
le système de capteur de vitesse de roue (7) comprend
une roue dentée (14) disposée sur un essieu (12) du véhicule ferroviaire (1), et
un capteur de vitesse de roue (18) fixé à demeure à un composant non rotatif d'un dispositif de montage d'essieu de l'essieu (12), et
le générateur (8) comprend
un aimant permanent (15) fixé à l'essieu (12), et
une bobine (19) fixée à demeure au composant non rotatif du dispositif de montage d'essieu,
dans lequel
l'unité de commande d'énergie (5) est configurée pour commander le générateur (8),
l'unité de commande de frein (4) est configurée pour traiter des signaux provenant du capteur de vitesse de roue (18) et pour commander l'actionneur de frein (9) sur la base des signaux traités,
la roue dentée (14) est disposée dans la région d'une extrémité de l'essieu (12) et l'aimant permanent (15) est fixé à l'essieu (12) dans la région de l'extrémité (13) de l'essieu (12),
l'extrémité (13) de l'essieu (12) est logée dans une boîte d'essieu non rotative (16) du véhicule ferroviaire (1), et
le capteur de vitesse de roue (18) et la bobine (19) sont fixés à un couvercle (17) de la boîte d'essieu (16).

2. Système de freinage (2) selon la revendication 1, dans lequel
le dispositif de commande (3) comprend une unité d'antienrayage (6), et
l'unité d'antienrayage (6) est configurée pour traiter des signaux provenant du capteur de vitesse de roue (18) et pour commander l'actionneur de frein (9) sur la base des signaux traités.

3. Système de freinage (2) selon l'une quelconque des revendications précédentes, dans lequel
le système de freinage (2) comprend un faisceau de câbles (20) incluant au moins deux câbles configurés pour envoyer des signaux de commande du dispositif de commande (3) au générateur (8), un câble configuré pour transférer l'énergie générée par le générateur (8), et un câble configuré pour raccorder le système de capteur de vitesse de roue (7) et le dispositif de commande (3).

4. Système de freinage (2) selon l'une quelconque des revendications précédentes, dans lequel
le système de freinage (2) comprend en outre un dispositif de stockage d'énergie (10) configuré pour stocker l'énergie électrique générée par le générateur (8), et l'unité de commande d'énergie (5) est configurée pour traiter des données provenant du dispositif de stockage d'énergie (10) et pour commander le générateur (8) sur la base des données traitées.

5. Système de freinage (2) selon l'une quelconque des revendications précédentes, dans lequel
le générateur (8) est configuré pour alimenter en énergie un autre consommateur électrique du véhicule ferroviaire (1).

6. Véhicule ferroviaire (1) comprenant un système de freinage (2) selon l'une quelconque des revendications précédentes.

7. Procédé de commande d'un système de freinage (2) selon l'une quelconque des revendications 1 à 5, le procédé comprenant les étapes suivantes :
la surveillance de paramètres de fonctionnement du véhicule ferroviaire (1) par l'unité de commande d'énergie (5) ; et
l'activation du générateur (8) par l'unité de commande d'énergie (5) pour générer de l'énergie électrique sur la base des paramètres de fonctionnement, dans lequel
l'un des paramètres de fonctionnement est une capacité énergétique actuelle du dispositif de stockage d'énergie (10) détectée par un voltmètre et traitée par l'unité de commande d'énergie (5), et le générateur (8) est activé par l'unité de commande d'énergie (5) lorsque la capacité énergétique actuelle tombe au-dessous d'un seuil prédéterminé,
**caractérisé en ce que**
le seuil prédéterminé de la capacité énergétique actuelle est déterminé sur la base d'une consommation d'énergie estimée pour le freinage du véhicule ferroviaire (1) d'une vitesse actuelle jusqu'à l'arrêt.

8. Procédé selon la revendication 7, dans lequel
l'un des paramètres de fonctionnement est une tension d'alimentation du dispositif de commande (3) détectée automatiquement par un voltmètre et traitée par l'unité de commande d'énergie (5), et le générateur (8) est activé par l'unité de commande d'énergie (5) lorsque la tension d'alimentation tombe au-dessous d'un seuil prédéterminé.

9. Procédé selon l'une quelconque des revendications 7 ou 8, dans lequel
l'un des paramètres de fonctionnement est un signal d'actionnement pour l'actionneur de frein (9), et
le générateur (8) est activé lorsque l'actionneur de frein (9) est actionné.

10. Procédé selon l'une quelconque des revendications 7 à 9, dans lequel
le générateur (8) alimente en énergie un autre consommateur électrique du véhicule ferroviaire (1).
